(19) Europäisches Patentamt
European Patent Office
Office européen des brevets

(11) **EP 4 672 769 A1**

(12) **EUROPEAN PATENT APPLICATION**

(43) Date of publication:
**31.12.2025 Bulletin 2026/01**

(21) Application number: **25184790.1**

(22) Date of filing: **24.06.2025**

(51) International Patent Classification (IPC):
**H04N 23/50** (2023.01) **G03B 17/00** (2021.01)

(52) Cooperative Patent Classification (CPC):
**H04N 23/50; G03B 17/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.06.2024 JP 2024103482**

(71) Applicant: **CANON KABUSHIKI KAISHA**
**Tokyo 146-8501 (JP)**

(72) Inventors:
• **ISHII, Kenji**
**Tokyo, 146-8501 (JP)**
• **ITO, Koichi**
**Tokyo, 146-8501 (JP)**

(74) Representative: **TBK**
**Bavariaring 4-6**
**80336 München (DE)**

(54) **ELECTRONIC APPARATUS**

(57) An electronic apparatus includes a first operation unit (122) and a second operation unit (123) each operable by a user. The first operation unit is configured to change a state of at least one switch (116, 117) when operated. The second operation unit is configured to change a state of a first switch (118) according to a first operation, and a state of a second switch (119) according to a second operation following the first operation, with an operating force greater than that of the first operation. A maximum value (Fa2) of the operating force for the second operation with the second operation unit is different from a maximum operating force (Fr2) for operating the first operation unit.

FIG. 6A

**Description**

BACKGROUND

Technical Field

The present disclosure relates to an electronic apparatus, such as an image pickup apparatus having a plurality of operation buttons.

Description of the Related Art

Some image pickup apparatuses have an autofocus (AF) start button as an operation button for instructing AF. Japanese Patent Application Laid-Open No. 2021-18382 discloses an image pickup apparatus having an AF start button disposed at a position near a release button, which is operable by the user with his thumb and instructs to start AF.

SUMMARY

The present disclosure in its first aspect provides an electronic apparatus as specified in claims 1 to 21.
Features of the present disclosure will become apparent from the following description of embodiments with reference to the attached drawings. The following description of embodiments is described by way of example..

BRIEF DESCRIPTION OF THE DRAWINGS

FIG. 1 is a block diagram illustrating the configuration of a camera according to each embodiment.
FIGs. 2A and 2B are perspective views of the camera according to a first embodiment.
FIGs. 3A and 3B are perspective views of the front side of the camera according to the first embodiment in a grip state.
FIGs. 4A and 4B are perspective views of the rear side of the camera according to the first embodiment in the grip state.
FIGs. 5A and 5B are rear views of the camera according to the first embodiment.
FIGs. 6A, 6B, and 6C illustrate a sectional view of the AF start button and a relationship between a pressing load and a pressed amount in the first embodiment.
FIGs. 7A and 7B illustrate a sectional view of a release button and a relationship between the pressing load and the pressed amount in the first embodiment.
FIGs. 8A, 8B, and 8C illustrate a sectional view of the AF start button and a relationship between the pressing load and the pressed amount in a second embodiment.
FIGs. 9A and 9B illustrate a sectional view of the AF start button and the relationship between the pressing load and the pressed amount in a third embodiment.
FIG. 10 is a schematic diagram of a release button according to the second embodiment.
FIGs. 11A and 11B illustrate a list of settings for the AF start button.

DESCRIPTION OF THE EMBODIMENTS

Referring now to the accompanying drawings, a detailed description will be given of embodiments according to the disclosure.

FIRST EMBODIMENT

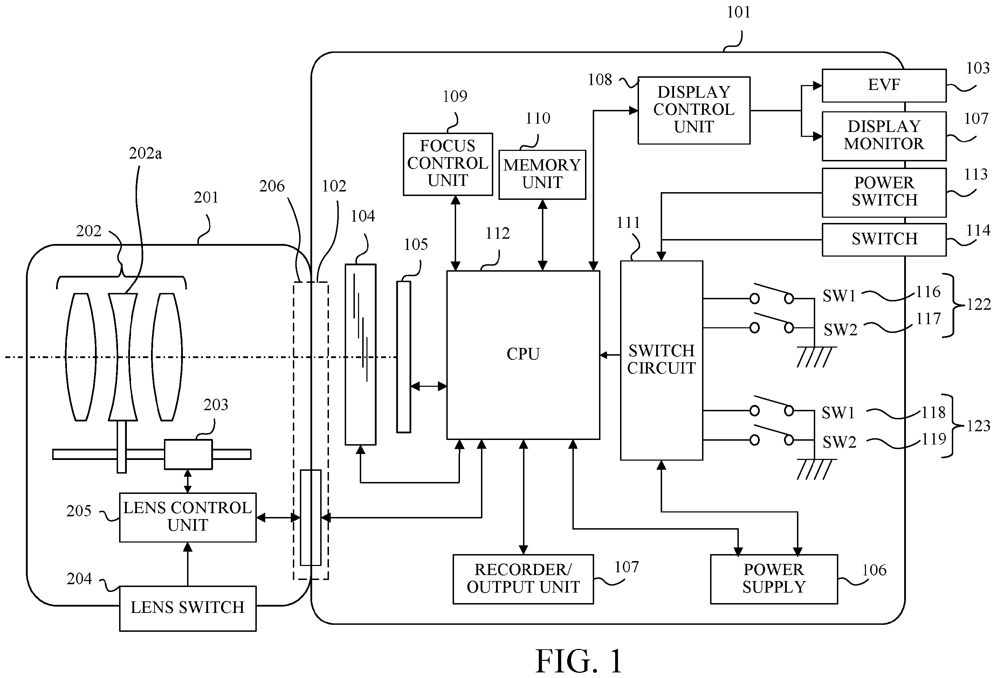

FIG. 1 illustrates the configuration of a camera system including a lens interchangeable type digital camera (referred to as a camera body hereinafter) 101 as an electronic apparatus (image pickup apparatus) according to a first embodiment, and an interchangeable lens 201 attachable to and detachable from the camera body 101. The interchangeable lens 201 is attached to the camera body 101 by mechanically and electrically connecting its mount 206 to a mount 102 of the camera body 101. The camera body 101 can supply power to the interchangeable lens 201 and transmit and receive a variety of instructions (commands) and data to and from the interchangeable lens 201.
The interchangeable lens 201 includes an imaging lens 202, a lens switch 204, and a lens control unit 205. The imaging lens 202 forms an optical image of an object. A focus lens 202a included in the imaging lens 202 is driven in the optical axis direction (indicated by an alternate long and short dash line in the figure) by a focus actuator 203 that operates according to a drive signal from the lens control unit 205. The focus actuator 203 includes a stepping motor, a leadscrew and a rack that convert the rotation of the stepping motor into a driving force in the optical axis direction. However, another motor such as a vibration type motor, a DC motor, and a voice coil motor (VCM) may be used for the focus actuator 203. The interchangeable lens 201 includes a lens switch 204 that allows the user to input a predetermined signal to the lens control unit 205.

The camera body 101 includes an image sensor 105 as a CMOS sensor configured to photoelectrically convert (capture) an object image as an optical image formed by the imaging lens 202, and a shutter 104 configured to control the exposure of the image sensor 105.

An imaging signal generated by the photoelectric conversion by the image sensor 105 is input to a CPU 112. The CPU 112 controls the camera body 101 and the interchangeable lens 201 while using a memory unit 110, and generates image data by performing various processing for the imaging signal. The CPU 112 outputs the generated image data to a display control unit 108 and the recorder/output unit 124. The recorder/output unit 124 records the image data into a recording medium such as a semiconductor memory, or outputs the image data to the outside via wired or wireless communication.

The CPU 112 acquires information for AF (referred to as AF information hereinafter) from the image sensor 105 according to an AF instruction, and outputs the AF information to a focus control unit 109. The focus control unit 109 calculates the drive amount of the focus lens 202a for AF (referred to as a focus drive amount hereinafter). The CPU 112 transmits a focus instruction including the focus drive amount input from the focus control unit 109 to the lens control unit 205. The lens control unit 205 causes the focus actuator 203 to drive the focus lens 202a according to the focus instruction. Thereby, AF is performed.

The AF information in this embodiment is a defocus amount acquired through focus detecting pixels that perform so-called pupil division and are disposed in some or all of the plurality of pixels of the image sensor 105. However, the AF information may be a contrast evaluation value based on high frequency components contained in the image data. In this case, the focus lens 202a is driven to a position where the contrast evaluation value is at its peak.

The display control unit 108 converts image data into display data and displays it on an electronic viewfinder (EVF) unit 103 or a display monitor 107 provided on the back of the camera body 101. Thereby, the image can be displayed as a live-view image before imaging, or as a recorded image generated by imaging.

The camera body 101 is provided with a plurality of switches that are operated by the user to give a variety of instructions and settings. The operation of each of these switches is detected by a switch circuit 111, which outputs a signal corresponding to the operated switch to the CPU 112.

When a power switch 113 is turned on, it supplies power from a power source 106 to each component in the camera body 101 (and the interchangeable lens 201). The switch 114 includes, for example, an optical pointing device described later, and its operation signal is detected by the switch circuit 111.

The camera body 101 includes a release button 122 as a first operation unit, and an AF start button 123 as a second operation unit. Both the release button 122 and the AF start button 123 have a two-step switch structure in which a switch state (e.g., turning-on state and turning-off state) is changed by a half-pressing operation (first operation), and is further changed by a fully pressing operation (second operation) following the half-pressing operation. The fully pressing operation requires a greater operating force than that of the half-pressing operation.

More specifically, when the release button 122 is half-pressed from an unoperated state, a release first switch (third switch) 116 becomes conductive and is turned on, and when the half-pressing operation turns into the fully pressing operation, a release second switch (fourth switch) 117 becomes conductive and is turned on. When the AF start button 123 is half-pressed from an unoperated state, an AF first switch 118 becomes conductive and is turned on, and when the half-pressing operation turns into the fully pressing operation, the AF second switch 119 becomes conductive and is turned on.

Operation amounts when the release button 122 and the AF start button 123 are half-pressed may be the same as or different from each other. Similarly, operation amounts when the release button 122 and the AF start button 123 are fully pressed after the half-pressing operation may be the same as or different from each other. Each of the first switch and each of the second switch may be turned on by becoming conductive as described above by the half-pressing operation and the fully pressing operation, or may be turned on by becoming nonconductive. In other words, the state may be switched by each of the half-pressing operation and the fully pressing operation.

The CPU 112 starts an imaging preparation operations such as AF and auto-exposure (AE) when the first release switch 116 of the release button 122 is turned on, and starts an imaging operation when the second release switch 117 is turned on. The user can change the settings of the operation that the CPU 112 performs in a case where the first release switch 116 is turned on.

The CPU 112 starts AF when the first AF switch 118 is turned on. At this time, it may be set so that imaging preparation operation other than AF is started when the first release switch 116 of the release button 122 is turned on. The CPU 112 changes the continuous shooting speed (continuous imaging speed) when the second AF switch 119 is turned on during continuous shooting.

For example, the user half-presses the AF start button 123 with his thumb at the AF start timing to cause the camera body 101 to start AF, and then fully presses the release button 122 at a proper timing thereafter to perform an imaging operation. Continuous shooting is performed by continuously fully pressing the release button 122. In a case where the user fully presses the AF start button 123 during continuous shooting, a continuous shooting speed during the fully pressing operation can be increased or decreased. More specifically, the continuous shooting speed can be temporarily increased during continuous shooting at a low speed.

Various functions can be assigned to the fully pressing operation of the AF start button 123 (turning on the AF second switch 119), such as a function to change the imaging quality and AF-related functions such as reselecting AF stop and start timings, in addition to the function of changing the continuous shooting speed described above. The AF start may be assigned to the fully pressing operation of the AF start button 123, and another function may be assigned to the half-pressing operation. That is, an AF-related function may be assigned to at least one of the half-pressing operation and the fully pressing operation of the AF start button 123. Although this button is referred to as the AF start button 123 here, a function unrelated AF may be assigned to this button.

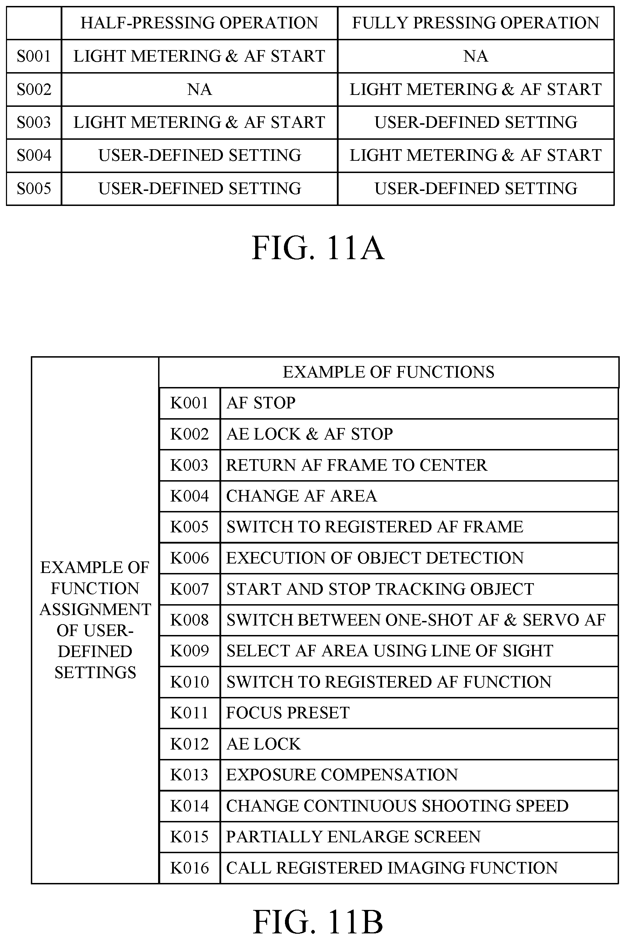

Referring now to FIGs. 11A and 11B, a description will be given of settings that can be assigned to the half-pressing operation and the fully pressing operation of the AF start button 123. FIG. 11A illustrates a list of settings for the AF start button 123. Five settings, from setting S001 to setting S005, can be assigned to the half-pressing operation and the fully pressing operation of the AF start button 123.

Setting S001 assigns the light metering (photometry) and AF start operations to the half-pressing operation and NA (not available) to the fully pressing operation. The light metering and AF start operations start the AE operation and AF operation by operating the AF start button 123. NA is a state in which no function is activated by the operation. Setting S002 assigns NA to the half-pressing operation and the light metering and AF start operations to the fully pressing operation. This setting is for users who are concerned about erroneous operation caused by the setting for performing the light metering and AF start operations when the AF start button 123 is half-pressed.

Setting S003 assigns the light metering and AF start operations to the half-pressing operation, and the user-defined settings to the fully pressing operation. The user-defined settings allow the user to arbitrarily set the functions to be assigned when the user operates the button. The contents of the user-defined settings will be described later with reference to FIG. 11B. Setting S004 assigns the user-defined settings to the half-pressing operation, and the light metering and AF start operation to the fully pressing operation. Setting S005 assigns the user-defined settings to both the half-pressing operation and the fully pressing operation.

FIG. 11B illustrates an example of function assignment for user-defined settings. Function K001 is an AF stop operation. The AF operation that is in progress can be stopped by operating the button. When the AF operation is not in progress, no operation occurs. This function is used, for example, to avoid undesired operations such as focusing on an obstacle that suddenly appears in a screen (image). Function K002 is AE lock and AF stop operations. In addition to function K001, the exposure setting at the time the button is pressed can be maintained for a predetermined time by operating the button. This function is used, for example, when a desired exposure state is to be maintained even when the exposure conditions within the screen change.

Function K003 is a function for returning (resetting) the AF area to the center. When the AF area is at a position other than the center due to the user's settings or camera operation, the AF area can be returned to the center of the screen by operating the button. In a case where the AF area is located at the center when the button is operated, the position of the AF area is not moved. Furthermore, due to this function, the location to which the AF area is returned is not limited to the center, and the AF area can be returned to an arbitrary location by prior settings.

Function K004 is a function for changing the AF (detecting) area. Operating the button can switch to a previously set AF area regardless of the setting before pressing the button. This function can change the size and shape of the AF area. This function can select whether to switch only while the button is pressed or to hold the switched state until the button is pressed again.

Function K005 is a function for switching to a registered AF area. Operating the button can switch to the previously set AF area condition regardless of the setting before pressing the button. This function can arbitrarily set the position, size, and shape of the AF area. This function can also select whether to switch only while the button is pressed or to hold the switched state until the button is pressed again.

Function K006 is execution of object detection. By operating the button, it is detected whether or not a specific object exists within the screen. The types of objects to be detected are, for example, the entire person, the face of a person, the eyes of a person, a bird, an animal other than a bird, a car, a train, and another vehicle. These objects may be specified by the user, or may be selected automatically by the camera. For birds and animals other than birds, the priority order may be set to whole, face, or eyes, and may be limited. This function can select whether detection is performed only while the button is pressed, or whether detection continues until the button is pressed again. In addition to detection, this function may include a setting to perform AF operation for the detected object.

Function K007 is the start and stop operation of object tracking. Operating the button can change the setting to detect an object within the screen, track the detected object, and continue AF operation. This function can also include settings to limit the object tracking area within the screen, change the object tracking target, and change the priority of which object to track. This function may change the tracking characteristics of object tracking and the tracking ability to object speed changes. This function also select whether to switch only while the button is pressed, or to maintain the switched state until the button is pressed again.

Function K008 is a function for switching between one-shot (single) AF and servo (continuous) AF. Operating the button can switch between the one-shot (single) AF operation setting that performs AF operation once and stops the lens operation after the in-focus state is obtained, and the servo (continuous) AF operation setting that continues the lens operation to focus on the object within the AF area while the AF operation is instructed. This function can also select whether the operation is performed only while the button is pressed, or to maintain the switched state until the button is pressed again.

Function K009 is a function for performing AF operation on an object captured by user's line of sight (visual line) when the user presses the button by operating the button in a camera having a so-called line-of-sight input function that allows the selection of an AF area by line-of-sight input.

Function K010 is a function for switching to a registered AF function. Operating the button can switch to a previously registered AF function. More specifically, the switchable AF function is a part or all of the AF-related functions described in functions K003 to K009, but another function may also be switchable. This function can select whether to switch only while the button is pressed or to hold the switched state until the button is pressed again.

Function K011 is a focus preset operation. By operating the button, AF operation is performed to focus on a preset distance.

Function K012 is an AE lock function. This is an operation of function K002 described above that does not stop AF. This function performs only the operation of maintaining the exposure setting when the button is pressed for a predetermined period.

Function K013 is an exposure compensation operation. Operating the button can provide exposure compensation by operating a dial or lever attached to the camera. This function may change to a preset exposure correction amount or to a state where exposure compensation is not performed.

Function K014 is a function for changing a continuous shooting speed. This function can change the continuous shooting speed to a preset continuous shooting speed while the button is pressed. For example, the AF start button 123 is set as setting S003, and a user-defined setting is set as function K014. The continuous shooting speed during normal operation is set to 10 frames per second, and the continuous shooting speed during button operation is set to 30 frames per second with function K014. Then, imaging is performed at 10 frames per second before the AF start button 123 is pressed and during the half-pressing operation, and at 30 frames per second only while the AF start button 123 is fully pressed. This function can select either changing the continuous shooting speed only while the button is pressed, or maintaining the change in the continuous shooting speed until the button is pressed again.

Function K015 is a function for partially enlarging a screen. Operating the button can enlarge and display a specific part of the EVF unit 103 or the display monitor 107. The enlarged part can be set, for example, to the center of the screen, the AF area, or the part of the user's line-of-sight captured by the line-of-sight input function. This function can also select either enlarging the image only while the button is pressed, or maintaining the enlarged state until the button is pressed again.

Function K016 is a call-up function of a registered imaging function. Operating the button can call and apply a predetermined function of the camera set in advance. The predetermined function is some or all of the functions described in function K001 to function K015, but may be another function. This function can also select whether the functions are applied only while the button is pressed or to maintain the applied state until the button is pressed again.

The settings from setting S001 to setting S005 and the functions from function K001 to function K016 are examples of function settings for the AF start button 123, and another function not described may be set.

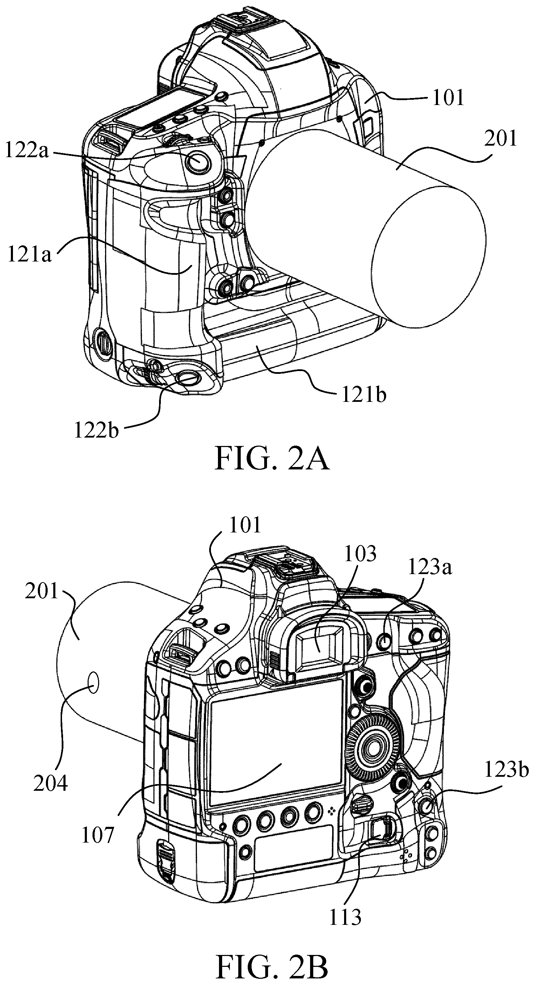

FIG. 2A illustrates the appearance of the camera system viewed from an oblique front side, and FIG. 2B illustrates the appearance of the camera system viewed from an oblique rear side. As illustrated in FIG. 2B, the lens switch 204 described above is provided on the outer circumference surface of the interchangeable lens 201.

As illustrated in FIG. 2A, the camera body 101 has a normal-position grip 121a and a vertical-position grip 121b that protrude forward from the left part when viewed from the front side (the right part viewed from the rear side) and the bottom, respectively. The user can hold the camera body 101 stably at the normal position by holding the normal-position grip 121a with the right hand while the camera body 101 is maintained at a horizontal position (with the long side of the image sensor 105 extending horizontally). The user can hold the camera body 101 stably at the vertical position by holding the vertical-position grip 121b with the right hand while the camera body 101 is maintained at a vertical position (with the long side of the image sensor 105 extending vertically).

As illustrated in FIG. 2B, the EVF unit 103, the display monitor 107, and power switch 113 are located on the back of the camera body 101.

The normal-position release button 122a, which is the release button 122, is located on the top surface of the camera body 101 near the index finger (first finger) of the user's right hand holding the normal-position grip 121a. On the back surface of the camera body 101, a normal-position AF start button 123a, which is the AF start button 123, is located near the thumb (second finger) of the user's right hand holding the normal-position grip 121a. On the side surface (but on the top surface at the vertical position) of the camera body 101, a vertical-position release button 122b, which is the release button 122, is located near the position of the index finger of the right hand holding the vertical-position grip 121b. On the back surface of the camera body 101, a vertical-position AF start button 123b, which is the AF start button 123, is located near the thumb of the right hand holding the vertical-position grip 121b.

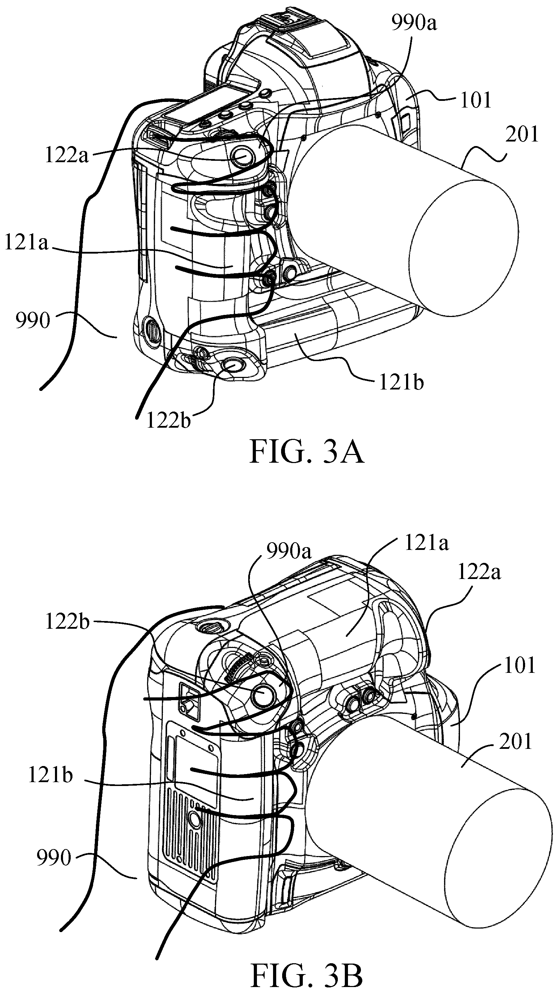

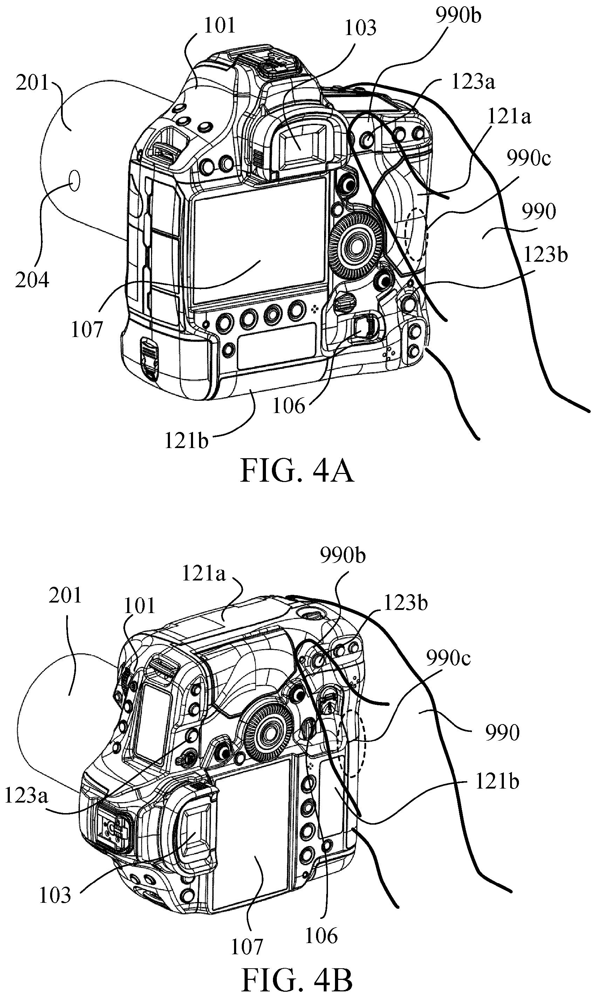

FIG. 3A illustrates the appearance of the camera system at the normal position when viewed from an oblique front side and the right hand of the user. FIG. 3B illustrates the appearance of the camera system at the vertical position when viewed from an oblique front side and the right hand of the user. FIG. 4A illustrates the appearance of the camera system at the normal position when viewed from an oblique rear side and the right hand of the user. FIG. 4B illustrates the appearance of the camera system at the vertical position when viewed from an oblique rear side and the right hand of the user.

As illustrated in FIG. 3A, the normal-position release button 122a is positioned at a position operable by the index finger 990a of the right hand 990 holding the normal-position grip 121a. In a case where the camera body 101 at the normal position is viewed from above, the normal-position release button 122a is positioned so that it overlaps the normal-position grip 121a protruding forward. As illustrated in FIG. 3B, the vertical-position release button 122b is positioned at a position operable by the index finger 990a of the right hand 990 holding the vertical-position grip 121b. In a case where the camera body 101 at the vertical position is viewed from above, the vertical-position release button 122b is positioned so that it overlaps the vertical-position grip 121b protruding forward.

FIGs. 4A and 4B illustrate the arrangement of the normal-position AF start button 123a and the vertical-position AF start button 123b on the camera body 101 viewed from diagonally behind. The normal-position AF start button 123a is located on the back of the camera body 101 at a position operable by the thumb 990b of the right hand 990 holding the normal-position grip 121a. The vertical-position AF start button 123b is located on the back of the camera body 101 at a position operable by the thumb 990b of the right hand 990 holding the vertical-position grip 121b.

The user holds the normal-position grip 121a or the vertical-position grip 121b with their middle finger, ring finger, and little finger, and holds the camera body 101 so as to pinch it from the front and back by pressing the ball of the foot 990c at the root of the thumb 990b against the back of the camera body 101. In this state, the user operates the normal-position AF start button 123a or the vertical-position AF start button 123b with the thumb 990b of the right hand 990.

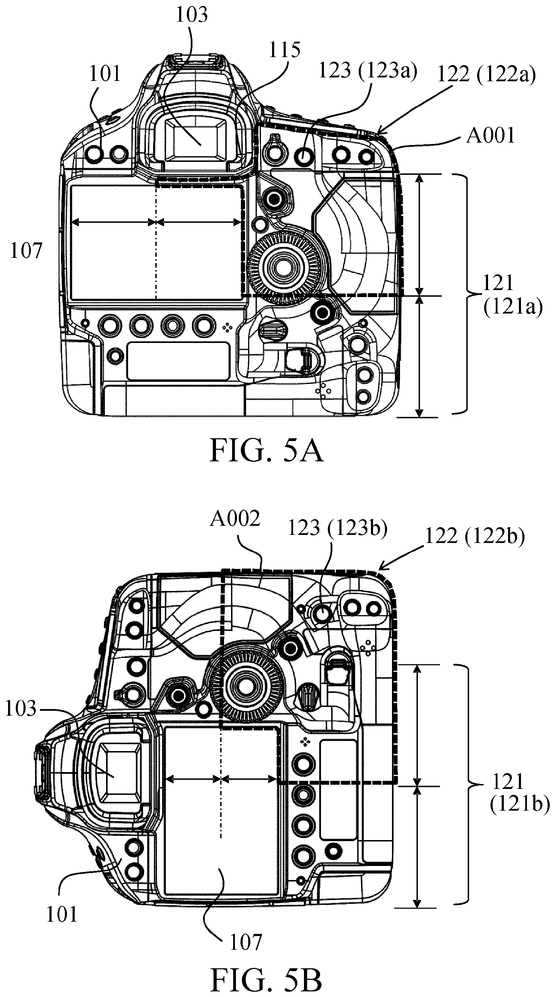

FIGs. 5A and 5B illustrate the arrangement of the normal-position AF start button 123a and the vertical-position AF start button 123b on the camera body 101 viewed from the rear side. The normal-position AF start button 123a is disposed above the center in the up-down (vertical) direction of the normal-position grip 121a in a case where the camera body 101 at the normal position is viewed from the rear side as illustrated in FIG. 5A. In other words, it is disposed closer to the normal-position release button 122a, which is hidden in FIG. 5A, than the center. As illustrated in FIG. 5A, the normal-position AF start button 123a may be disposed closer to the normal-position grip 121a than a centerline in the left-right (horizontal) direction of the display monitor 107, and in area A001 within a broken line that avoids a convex portion 115 where the EVF unit 103 protrudes to the rear side.

The vertical-position AF start button 123b is located above the center in the vertical direction of the vertical-position grip 121b in a case where the camera body 101 is viewed from the rear side at the vertical position as illustrated in FIG. 5B. In other words, it is located closer to the vertical-position release button 122b, which is hidden in FIG. 5B, than the center. The vertical-position AF start button 123b may be located in area A002 within a broken dashed line closer to the vertical-position grip 121b than a centerline in the horizontal direction of the display monitor 107, as illustrated in FIG. 5B. In this embodiment, there is no convex portion 115 within the area A002, but if the convex portion 115 exists, the area A002 may avoid the convex portion 115.

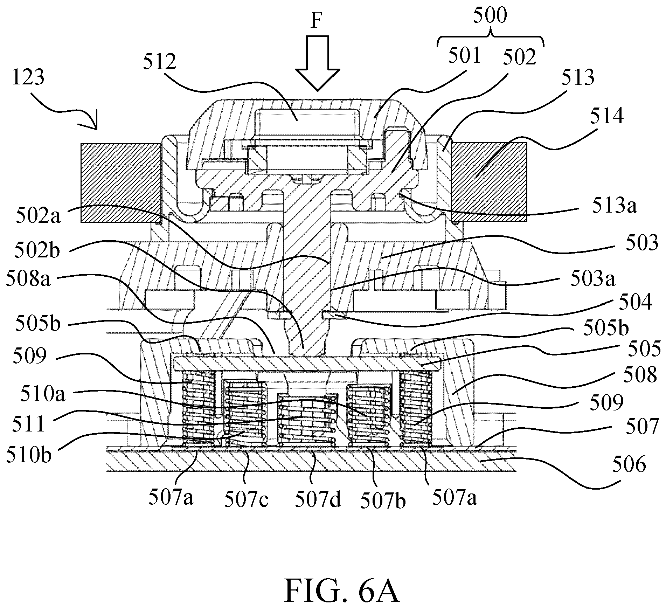

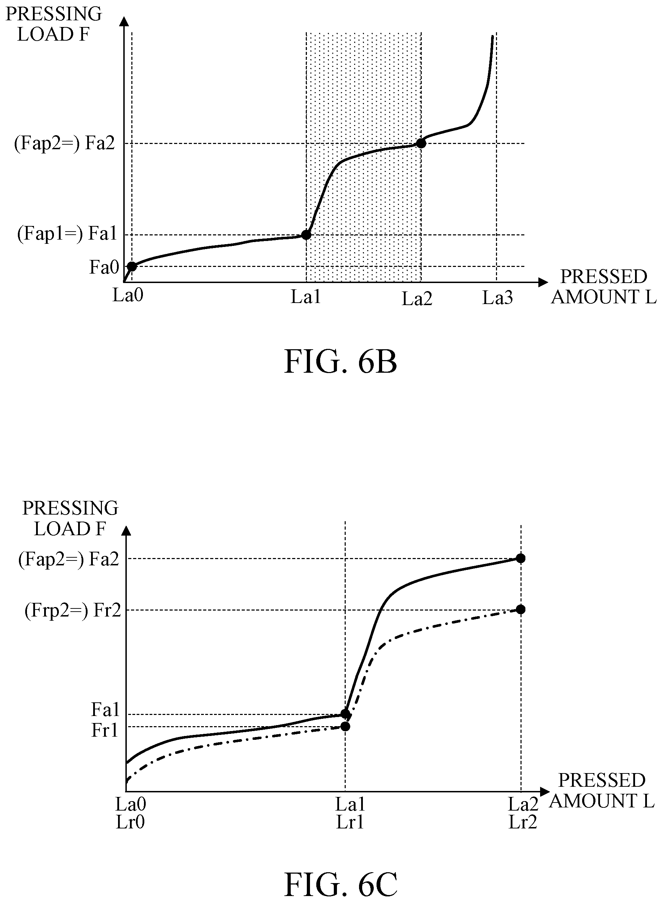

Referring now to FIG. 6A, a description will be given of the structure of the AF start button 123 (123a, 123b) with a two-step switch structure. FIG. 6A illustrates a section of the AF start button 123 provided on the camera body 101. FIG. 6B illustrates a relationship between pressing load F (vertical axis), which is an operating force when the AF start button 123 is pressed, and pressed amount L (horizontal axis), which is an operation amount.

The following description assumes that the normal-position AF start button 123a and the vertical-position AF start button 123b have the same structure. However, the normal-position AF start button 123a and the vertical-position AF start button 123b may have different structures. Even in this case, the relationships between the pressing loads and the pressed amounts of the normal-position AF start button 123a and the vertical-position AF start button 123b may be nearly the same so that the user can perform imaging with as similar an operation sense as possible at the normal position and the vertical position.

FIG. 6A illustrates the AF start button 123 in its initial state (unoperated state) where it has not been pressed down. A ring-shaped waterproof rubber 513 made of silicone rubber or the like is fitted into an exterior cover 514 made of metal or plastic, and the AF start button 123 is disposed inside the waterproof rubber 513.

A button portion 500 as an operation member is made by bonding together a molded button top 501 and a button pusher 502 which are molded and integrated together. The button pusher 502 is held by inserting its button shaft 502a into a button engagement hole 503a in a button base 503 fixed to an exterior cover 514 with a screw (not illustrated). A washer 504 is connected to the button pusher 502 near the button pusher portion 502b at the tip of the button pusher 502 to prevent it from coming off. A waterproof part 513a of the waterproof rubber 513 is in contact with the entire circumference of a part of the button pusher 502 while being pressed, thereby securing the waterproof performance of the AF start button 123.

Inside the button portion 500, an optical pointing device 512 is provided as the switch 114 illustrated in FIG. 1. The optical pointing device 512 optically reads the finger of the user touching the button top 501 and calculates a moving direction of the finger. A signal indicating the contact of the finger and the moving direction is detected by the switch circuit 111 described above. The optical pointing device 512 does not have to be provided on the AF start button 123.

A spring holder 508 is disposed under the button portion 500 as a plastic molded part. The spring holder 508 is disposed on a base metal plate 506 made of an aluminum or stainless steel metal plate. A switch flexible printed circuit (FPC) 507 is disposed so as to be sandwiched between the spring holder 508 and the base metal plate 506.

The switch FPC 507 has a plurality of exposed metal portions (contacts) which are part of the signal pattern. These contacts are in contact with two first coil springs 509, two second coil springs 510a and 510b, and one third coil spring 511, which are each conductive coil springs disposed inside the spring holder 508.

More specifically, the two first coil springs 509 contact two contacts 507a provided on the switch FPC 507, respectively, and are conductive. The potential of both contacts 507a is ground. The two second coil springs 510a and 510b are used as a coil spring A (GND) 510a as a first elastic member and a coil spring B (AF first switch turned on) 510b as a second elastic member, which have different mechanical and electrical functions. The coil spring A 510a contacts a contact 507b of the switch FPC 507 and is conductive, and the coil spring B 510b contacts a contact 507c and is conductive. The potential of contact 507b is ground, and the contact 507c is a contact for outputting a turning-on signal of the AF first switch 118. A third coil spring 511 contacts a contact 507d of switch FPC 507 and is conductive. The contact 507d is a contact for outputting a turning-on signal of AF second switch 119.

A switch shaft 505 made of a conductive metal is disposed within the spring holder 508. The switch shaft 505 receives an upward biasing force from the first coil spring 509. The first coil spring 509, the second coil springs 510a and 510b, and the third coil spring 511 provide a reaction force against the depression of the button portion 500. As this reaction force increases, the operating forces for the half-pressing operation and the fully pressing operation increase.

The relationship between the pressing load F and the pressed amount L illustrated in FIG. 6B will be discussed. In the initial state illustrated in FIG. 6A, the switch shaft 505 contacts a shaft pressing portion 505b provided on the ceiling of the spring holder 508. When the button portion 500 receives the pressing load from this initial state and starts to move downward, first the play between the parts is absorbed. Then, when the pressing load F becomes Fa0 and the pressed amount L becomes La0, the switch shaft 505 starts compressing (charging) the first coil spring 509.

As the pressing load F increases, the switch shaft 505 moves downward while charging the first coil spring 509, and when the pressing load F becomes Fa1 (first operating force) and the pressed amount becomes La1 (first operating amount), the switch shaft 505 comes into contact with the second coil springs 510a and 510b. At this time, since the second coil springs 510a and 510b are in contact with the contacts 507b and 507c, respectively, the potential of the contact 507c falls to ground via the switch shaft 505, and as a result, a turning-on signal is output from the AF first switch 118.

As the pressing load F increases further, the switch shaft 505 moves downward while charging the first coil spring 509 and the second coil springs 510a, 510b. Then, when the pressing load F becomes Fa2 (second operating force) and the pressed amount L becomes La2 (second operating amount), the switch shaft 505 comes into contact with the third coil spring 511. At this time, because the third coil spring 511 is in contact with the contact 507d, the potential of the contact 507d also falls to ground via the switch shaft 505, and as a result, a turning-on signal is output from the AF second switch 119.

In a case where the pressing load F increases thereafter, the switch shaft 505 reaches its mechanical end at the pressed amount La3 and stops.

Fap1 and Fap2 are a minimum pressing load and a maximum pressing load (maximum operating force), respectively, for the pressed amount L of the button portion 500 to change from the pressed amount La1 to the pressed amount La2. The main parameters of the operating sense (feeling of pressing) of the AF start button 123 are the absolute values of the minimum pressing load Fap1 and the maximum pressing load Fap2, and the maximum-minimum load ratio Ra calculated by the following equation (1):

$$Ra = (Fap2)/(Fap1) \qquad (1)$$

In the AF start button 123 with a two-step switch structure using a coil spring, the pressing load Fa1 is equal to the minimum pressing load Fap1, and the pressing load Fa2 is equal to the maximum pressing load Fap2. This is because, in principle, the pressing load increases as the pressed amount increases. Therefore, the maximum-minimum load ratio Ra is equal to a ratio of the maximum pressing load Fap2 to the minimum pressing load Fap1.

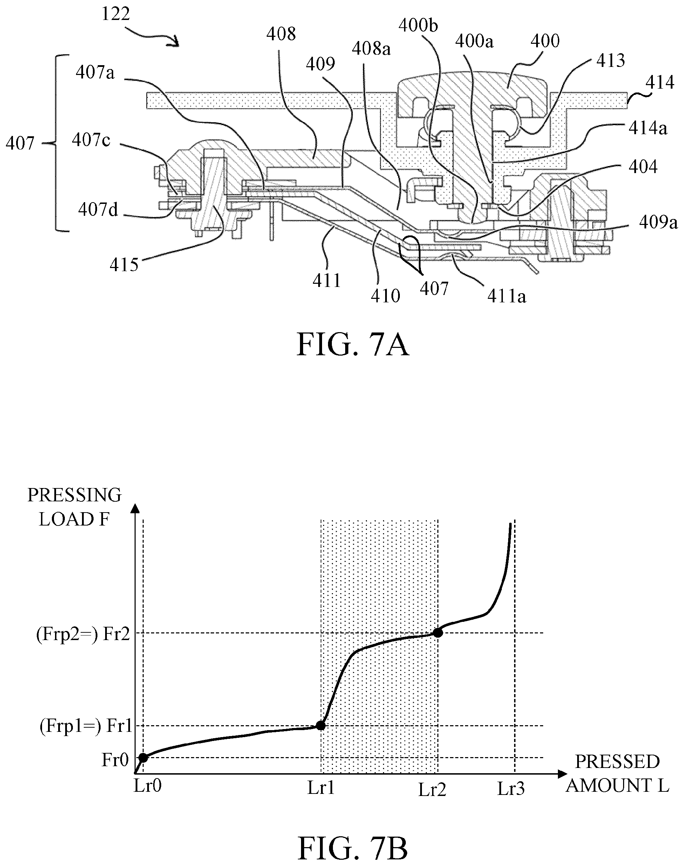

Referring now to FIG. 7A, a description will be given of the structure of the release button 122 (122a, 122b) with a two-step switch structure. FIG. 7A illustrates a section of the release button 122 provided on the camera body 101. FIG. 7B illustrates a relationship between the pressing load F (vertical axis), which is the operating force when the release button 122 is pressed, and the pressed amount L (horizontal axis).

The following description assumes that the normal-position release button 122a and the vertical-position release button 122b have the same structure. However, the normal-position release button 122a and the vertical-position release button 122b may have different structures. Even in this case, the relationships between the pressing loads and the pressed amounts of the normal-position release button 122a and the vertical-position release button 122b may be nearly the same so that the user can perform imaging with as similar an operation sense as possible at the normal position and the vertical position.

Here, for members of the release button 122 that have a similar function to the AF start button 123, the last two digits of the reference numerals are the same and a description thereof will be partially omitted. For example, the members of the AF start button 123 that are designated by the reference numeral 5xx have a similar function to the members of the release button 122 that are designated by the reference numeral 4xx.

FIG. 7A illustrates the release button 122 in its initial state where it has not been pressed down. A button 400 is attached to an exterior cover 414 (514) as an operation member. The button 400 is held by inserting its button shaft 400a into button engagement hole 414a provided in the exterior cover 414. A gap between the button shaft 400a and the button engagement hole 414a is surrounded by a waterproof rubber boot 413. Thereby, the waterproof performance of release button 122 is secured. A washer 404 is connected to the button 400 near the button pusher 400b at its tip to prevent it from falling off.

A spring holder 408 is disposed below the button 400. A first leaf spring 409, a second leaf spring 410, and a third leaf spring 411, which are conductive metallic leaf springs (flat springs), are fixed to the spring holder 408 by leaf-spring fixing screws 415. The first leaf spring 409, the second leaf spring 410, and the third leaf spring 411 provide a reaction force against the depression of the button 400. As this reaction force increases, the operating forces for the half-pressing operation and the fully pressing operation increase. In the initial state, the first leaf spring 409, the second leaf spring 410, and the third leaf spring 411 are separated from each other.

The switch FPC 407 is sandwiched near the screwed portions of the first leaf spring 409, the second leaf spring 410, and the third leaf spring 411. In the portion of the switch FPC 407 sandwiched between the first leaf spring 409, the second leaf spring 410, and the third leaf spring 411, contacts that are part of the signal pattern of the switch FPC 407 are exposed, and the contacts are conductive to each leaf spring. More specifically, the first leaf spring 409 is in contact with contact 407a, which is at ground potential, and is conductive. The second leaf spring 410 is in contact with the contact 407c for outputting the turning-on signal of the first release switch 116 and is conductive. The third leaf spring 411 is in contact with the contact 407d for outputting the turning-on signal of the second release switch 117 and is conductive.

A description will be given of a relationship between the pressing load F and the pressed amount L illustrated in FIG. 7B. In the initial state illustrated in FIG. 7A, the first leaf spring 409, the second leaf spring 410, and the third leaf spring 411 are not in contact with each other as described above. When the button 400 receives the pressing load and starts moving downward from this point, the play between the parts is absorbed first. Then, when the pressing load F becomes Fr0 and the pressed amount L becomes Lr0, the button pusher 400b comes in contact with the first leaf spring 409 and the first leaf spring 409 starts deforming. The pressing load Fr0 corresponds to the play and friction between the parts as well as the reaction force from the waterproof rubber boot 413.

As the pressing load F increases, the first leaf spring 409 deforms while increasing its reaction force, and when the pressing load F becomes Fr1 (third operating force) and the pressed amount L becomes Lr1 (fourth operating amount), the contact 409a at the tip of the first leaf spring 409 comes into contact with the upper surface of the second leaf spring 410. When the first leaf spring 409 comes into contact with the second leaf spring 410 and becomes conductive, the potential of the second leaf spring 410 drops to ground. Thereby, a turning-on signal of the first release switch 116 is output.

When the pressing load F further increases and the button 400 is pressed down, the first leaf spring 409 and the second leaf spring 410, which are in contact with each other and are integrated, deform while further increasing the reaction force. Then, when the pressing load F becomes Fr2 (fourth operating force) and the pressed amount L becomes Lr2 (fourth operating amount), the bottom surface of the second leaf spring 410 comes into contact with the contact portion 411a of the third leaf spring 411. The third leaf spring 411, which is in contact with the contact 407d, comes into contact with the second leaf spring 410 integrated with the first leaf spring 409 and becomes conductive, so that the potential of the third leaf spring 411 falls to ground, and a turning-on signal of the AF second switch 119 is output. Thereafter, as the pressing load F increases, the button 400 reaches the mechanical end at the pressed amount Lr3 and stops.

Frp1 and Frp2 are minimum and maximum loads for the pressed amount L of the button 400 to change from Lr1 to Lr2, respectively. The operating sense (feeling of pressing) of the release button 122 is determined mainly by the absolute values of the minimum and maximum loads Frp1 and Frp2, and a maximum-minimum load ratio Rr calculated by the following equation (2).

$$Rr = (Frp2)/(Frp1) \qquad (2)$$

In the release button 122 with a two-step switch structure using a leaf spring, the pressing load Fr1 is equal to the minimum pressing load Frp1, and the pressing load Fr2 is equal to the maximum pressing load Frp2. This is because, in principle, the pressing load increases as the pressed amount increases, just as in the case of using a coil spring. Therefore, the maximum-minimum load ratio Rr is equal to the ratio between the maximum pressing load Frp2 and the minimum pressing load Frp1.

Next follows a description of load settings for the release button 122 and the AF start button 123. As illustrated in FIGs. 3A, 3B, 4A, and 4B, the user holds the grip (121a, 121b) in his right hand and operates the release button 122 (122a, 122b) with his index finger 990a and the AF start button 123 (122a, 122b) with his thumb 990b. At this time, the thumb 990b and index finger 990a have the following characteristics.

The first characteristic is that the thumb is shorter than the index finger. Operation with the thumb while holding the grip is more likely to involve a pressing action with the pad of the finger or the entire finger rather than an action of bending the joint at the fingertip.

The second characteristic is that the right hand holding the grip supports the camera body near the ball of the thumb 990c. Therefore, in addition to the first characteristic, it is difficult to bend the pad of the thumb, and it is more likely to induce a pressing action with the pad of the finger or the entire finger.

The third characteristic is that it is easier to apply force with the thumb than with the index finger in a pressing-down operation. For example, a user who is engrossed in operating the camera often ends up gripping the grip tightly, and if the index finger and thumb are placed on the release button 122 and AF start button 123, which are located on opposite sides of the camera body, the user tends to grip the grip even tighter.

Due to these three characteristics, it is more difficult to finely adjust the operating force with the thumb than with the index finger, and the operating force is also likely to be strong. As a result, the user is to generate enough force with the index finger to fully press the release button 122, while controlling the half-pressing operation and the fully pressing operation of the AF start button 123 with the thumb. Thereby, it is difficult for the user to concentrate on imaging because his attention is drawn to the operation with his thumb. There is a strong tendency for the thumb to apply stronger pressure when the user is particularly engrossed in imaging. Thus, the AF start button 123 is to have a structure that allows for quick operation with the thumb while also making it easy for the user to concentrate on imaging. In other words, the operating force for operating the AF start button 123 may be greater than the operating force for operating the release button 122, so that the AF start button 123 is less likely to be accidentally operated by the thumb when both the index finger and thumb are tense.

FIG. 6C illustrates a comparison of the pressing load F (vertical axis) and pressed amount L (horizontal axis) of the AF start button 123 and the release button 122. In FIG. 6C, the pressing loads of the AF start button 123 and the release button 122 are indicated by a solid line and an alternate long and short dash line, respectively. In this embodiment, the pressing load Fa2 (maximum pressing load Fap2) at which the AF start button 123 turns on the AF second switch 119 is greater than the pressing load Fr2 at which the release button 122 turns on the second release switch 117. In other words, the operating force (maximum value) for fully pressing the AF start button 123 is greater than the operating force for fully pressing the release button 122.

In FIG. 6C, the pressed amounts of the AF start button 123 and the release button 122 are illustrated as La1=Lr1 and La2=Lr2, but these pressed amounts may be different. In FIG. 6C, the pressing load Fa1 at which the AF start button 123 turns on the AF first switch 118 is greater than the pressing load Fr1 at which the release button 122 turns on the first release switch 116. However, they may be the same, or Fa1 may be smaller than Fr1.

In this embodiment, as described above, the maximum pressing load Fap2 is equal to the pressing load Fa2. Therefore, the fact that the maximum pressing load Fap2 of the AF start button 123 is greater than the pressing load Fr2 of the release button 122 can be rephrased as the load Fa2 of the AF start button 123 being greater than the pressing load Fr2 of the release button 122. However, depending on the structure of the AF start button 123, there are cases where the maximum pressing load Fap2 does not match the pressing load Fa2. This will be described in the second embodiment.

The click sense (the step feeling) from the half-pressing operation to the fully pressing operation can be achieved by setting the maximum-minimum load ratio Ra illustrated in equation (1) to a predetermined value or more. In particular, in a case where an AF start instruction is assigned to the half-pressing operation of the AF start button 123, the half-pressing operation tends to be performed frequently, and the half-pressing operation may continue for a long period (or may be held down). Thus, in order to facilitate frequent half-pressing operations and a continued half-pressing operation for a long period (a held-down half-pressed operation), the pressing load Fa1 for turning on the AF first switch 118 may be light.

On the other hand, it is necessary to prevent an erroneous operation in which the user fully presses the AF start button 123 although he intends to half-press it. It is also necessary to prevent an erroneous full-pressing operation due to slight increases in operating force while the AF start button 123 is half-pressed for a long period (or the half-pressing state of the AF start button 123 is held down). Thus, the maximum pressing load Fap2 from turning-on of the AF first switch 118 to turning-on of the AF second switch 119 must be sufficiently larger than the pressing load Fa1 (i.e., the minimum pressing load Fap1) for keeping turning on of the AF first switch 118. In other words, the value of the maximum-minimum load ratio Ra must be greater than or equal to a predetermined value.

More specifically, it has been experimentally found that a maximum pressing load Fap2 of 2.0 N or more is effective in suppressing the above erroneous operations. It may be more effective if the maximum pressing load Fap2 is 2.5N or more, and even more effective if it is 3.0N or more. However, it is also known that if the maximum pressing load Fap2 is too large when the AF start button 123 is fully pressed for a long period (or the fully pressing state of the AF start button 123 is held down), the user may feel fatigue around the thumb 990b and the ball of the foot 990c. Thus, the maximum pressing load Fap2 may be set according to whether the function set to the fully pressing operation of the AF start button 123 is a function that is pressed for a long period (or held down).

It has been experimentally found that a maximum-minimum load ratio Ra of 2.0 or more is effective in suppressing erroneous operation. A maximum-minimum load ratio Ra of 2.5 or more or 3.0 or more is more effective in suppressing erroneous operation.

Thus, by increasing the maximum pressing load Fap2 and the maximum-minimum load ratio Ra within the range where the AF start button 123 can be pressed down with the thumb, a good operation sense of the AF start button 123 can be achieved.

The relationship between the maximum-minimum load ratio Ra and the maximum-minimum load ratio Rr may be as follows. In the release button 122, which instructs an imaging operation by the fully pressing operation, it is necessary for the maximum-minimum load ratio Rr to be relatively large in order to prevent erroneous operations of the first release switch 116 and the second release switch 117. However, in comparison with the AF start button 123, the release button 122 is to be fully pressed as quickly as possible from the initial state or the half-pressed state. Thus, the maximum-minimum load ratio Rr may not be too high. Hence, based on the above first to third characteristics, the maximum-minimum load ratio Ra, which may be high, and the maximum-minimum load ratio Rr, which may not be too high, may satisfy the following inequality (3):

$$Ra > Rr \qquad\qquad (3)$$

In other words, the ratio (Ra) of the maximum operating force to the minimum operating force for fully pressing the AF start button 123 is greater than the ratio (Rr) of the maximum operating force to the minimum operating force for fully pressing the release button 122.

SECOND EMBODIMENT

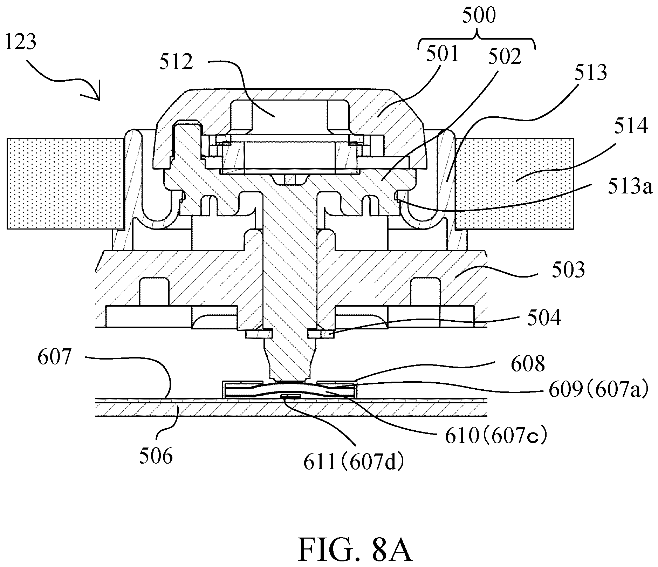

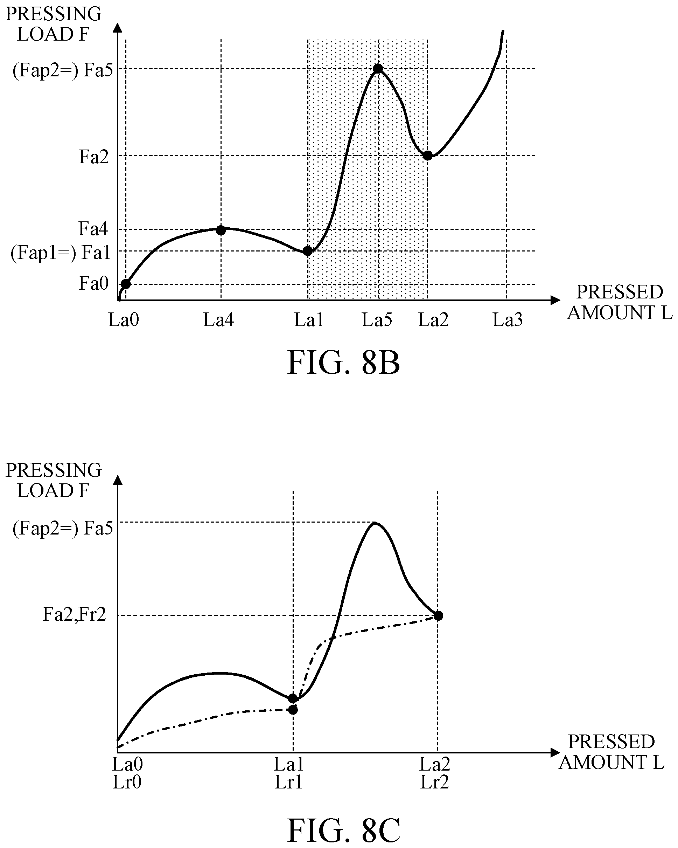

FIG. 8A illustrates a section of an AF start button 123 according to a second embodiment. FIG. 8B illustrates a relationship between the pressing load F (vertical axis) and the pressed amount L (horizontal axis) in the AF start button 123.

In this embodiment, those elements, which are corresponding elements in the first embodiment, will be designated by the same reference numerals, and a description thereof will be omitted. Similar members will be designated by the same reference numerals with the last two digits, and a partial description thereof will be omitted. For example, the members in this embodiment given the reference numerals 6xx have similar functions to the members given the reference numerals 5xx in the first embodiment.

FIG. 8A illustrates the AF start button 123 in the initial state in which it is not pressed down. A two-step metal dome switch 608 mounted on a switch FPC 607 is disposed below a button pusher portion 502b of the button pusher 502.

A first metal dome 609 and a second metal dome 610, each formed into a dome shape from a conductive elastic member such as a metal plate, are disposed inside the metal dome switch 608. A bottom contact 611, which is formed by exposing a metal contact or a metal pattern, is provided at the bottom of the metal dome switch 608. The first metal dome 609 is in electrical contact with a contact 607a provided on the switch FPC 607, and is at ground potential. The second metal dome 610 is in electrical contact with a contact 607c provided on the switch FPC 607. The contact 607c is a contact for outputting an turning-on signal for the AF first switch 118. The bottom contact 611 is in electrical contact with a contact 607d provided on the switch FPC 607. The contact 607d is a contact for outputting a turning-on signal of the AF second switch 119.

A relationship between the pressing load F and the pressed amount L illustrated in FIG. 8B will be discussed. When the button portion 500 is pressed from the initial state illustrated in FIG. 8A, first the play between the parts is absorbed. Thereafter, when the pressing load F becomes Fa0 and the pressed amount becomes La0, the button pusher portion 502b comes into contact with the first metal dome 609. As the pressing load F increases, the button pusher portion 502b moves downward while compressing the first metal dome 609, and when the pressing load F becomes Fa1 (first operating force) and the pressed amount L becomes La1 (first operating amount), the first metal dome 609 comes into contact with the second metal dome 610. Thereby, the potential of the contact 607c falls to ground, and a turning-on signal of the AF first switch 118 is output.

When the button portion 500 moves downward, the first metal dome 609 and the second metal dome 610, which have come into contact with each other and are integrated, come into contact with the bottom contact 611 as the pressing load F becomes Fa2 (second operating force) and the pressed amount L becomes La2 (second operating amount). Thereby, the potential of the contact 607d drops to ground, and the AF second switch 119 outputs a turning-on signal.

In this embodiment, the dome shape of the compressed first metal dome 609 is inverted at a pressed amount La4 between pressed amounts La0 and La1. Thereby, the pressing load F for moving the button portion 500 downward peaks at pressing load Fa4 at pressed amount La4 and then temporarily drops. This change in pressing load F provides the user with a click sense from the start of pressing the button portion 500 to the completion of the half-pressing operation at pressed amount La1 (until the AF first switch 118 turns on).

At a pressed amount La5 from the pressed amount La1 to the pressed amount La2, the dome shape of the compressed second metal dome 610 is inverted. Thereby, the pressing load F for moving the button portion 500 downwards peaks at a pressing load Fa5 at the pressed amount La5 and then once drops. This change in the pressing load F provides the user with a click sense during a period from the half-pressing operation to the completion of the fully pressing operation at the pressed amount La2 (until the AF second switch 119 turns on). The click sense generated at the pressed amount La5 serves as a guide for operation when the user wishes to hold (down) the AF start button 123 in a half-pressed state for a long period.

In this embodiment, unlike the first embodiment, the maximum value Fa4 of the pressing load F until the AF first switch 118 turns on does not coincide with the pressing load Fa1 when the AF first switch 118 turns on, and Fa4 > Fa1. The maximum value Fa5 of the pressing load F from after the AF first switch 118 is turned on until the AF second switch 119 is turned on does not coincide with the pressing load Fa2 when the AF second switch 119 is turned on, and Fa5 > Fa2. In such a case, the maximum-minimum load ratio Ra, which is a parameter for the operation sense of the AF start button 123, is calculated as follows (4) because Fap1=Fa1 and Fap2=Fa5 in equation (1).

$$\text{Maximum-minimum load ratio } Ra=(Fa5)/(Fa1) \qquad (4)$$

In this embodiment, it is important to prevent the user from unintentionally pressing the switch down to the pressed amount La2 at which the AF second switch 119 is turned on rather than the pressing load Fa2 at which the AF second switch 119 is turned on. That is, it is important to set the maximum pressing load Fap2 (Fa5) from turning on of the AF first switch 118 to turning on of the AF second switch 119 to be properly large relative to the minimum pressing load Fap1 (Fa1).

FIG. 8C illustrates a comparison of the pressing load F (vertical axis) and pressed amount L (horizontal axis) of the AF start button 123 and the release button 122. In FIG. 8C, the pressing loads of the AF start button 123 and the release button 122 are illustrated by a solid line and an alternate long and short dash line, respectively. In this embodiment, the pressing load Fa2 at which the AF second switch 119 of the AF start button 123 is turned on is equivalent to the pressing load Fr2 at which the second release switch 117 of the release button 122 is turned on. However, the maximum pressing load Fap2 (Fa5) of the AF start button 123 is greater than the pressing load Fr2 of the release button 122. That is, in this embodiment, the operating force for fully pressing the AF start button 123 is greater than the operating force for fully pressing the release button 122.

In FIG. 8C, the pressed amounts of the AF start button 123 and the release button 122 are illustrated as La1=Lr1 and La2=Lr2, respectively, but these pressed amounts may be different. In FIG. 8C, the pressing load Fa1 at which the AF first switch 118 of the AF start button 123 is turned on is greater than the pressing load Fr1 at which the first release switch 116 of the release button 122 is turned on. However, they may be the same, or Fa1 may be smaller than Fr1.

The maximum pressing load Fap2 and the maximum-minimum load ratio Ra in this embodiment may have the same values as those in the first embodiment.

THIRD EMBODIMENT

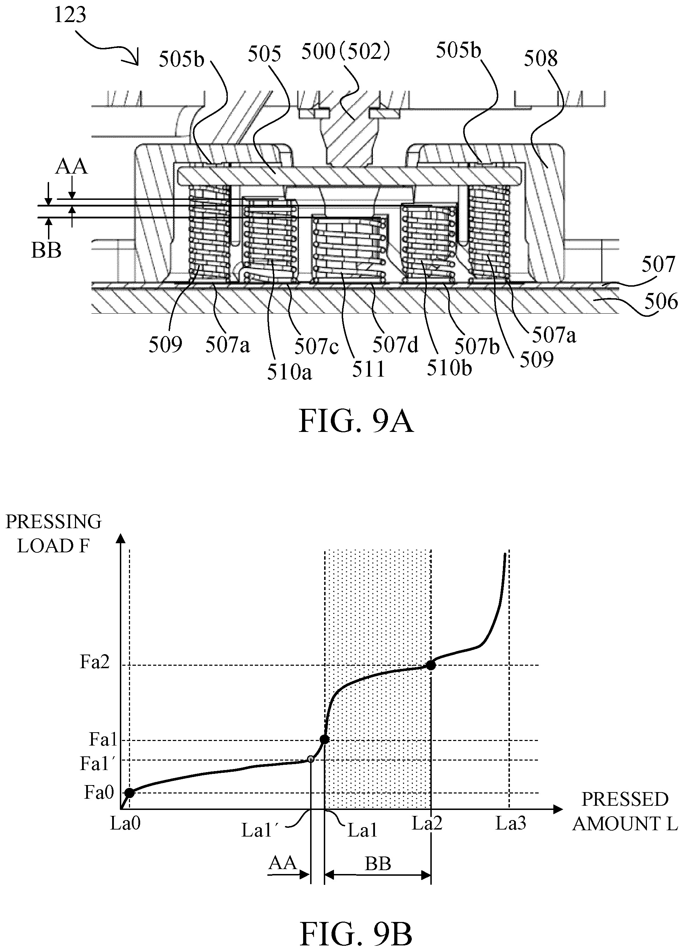

FIG. 9A illustrates a section of a part of an AF start button 123 according to a third embodiment. FIG. 9B illustrates a relationship between the pressing load F (vertical axis) and the pressed amount L (horizontal axis) in the AF start button 123. Those elements in this embodiment, which are corresponding elements in the AF start button 123 according to the first embodiment, will be designated by the same reference numerals, and a description thereof will be omitted.

FIG. 9A illustrates the AF start button 123 in the initial state in which no pressing operation has been performed. A spring holder 508 is provided and disposed on a base metal plate 506 below the button portion 500. A switch FPC 507 is disposed so as to be sandwiched between the spring holder 508 and the base metal plate 506, and has a plurality of contacts. Of the plurality of contacts, two contacts 507a contact two first coil springs 509, contacts 507b and 507c contact second coil springs 510a and 510b, respectively, and contact 507d contacts a third coil spring 511.

A switch shaft 505, which is disposed within the spring holder 508, receives an upward biasing force from the first coil spring 509.

In this embodiment, within the spring holder 508, the upper end of the second coil spring 510a is disposed at a higher position than the upper end of second coil spring 510b. Thereby, when switch shaft 505 moves downward by pressing down button portion 500, it first comes into contact with second coil spring (coil spring A (GND)) 510a, and then comes into contact with second coil spring (coil spring B (AF first switch turned on)) 510b. Then, having moved further downward, the switch shaft 505 comes into contact with the third coil spring 511. In other words, by pressing down button portion 500, the switch shaft 505 comes into contact with the second coil spring (coil spring A) 510a, the second coil spring (coil spring B) 510b, and the third coil spring 511 in this order to charge them. Thereby, the operating forces for the half-pressing operation and the fully pressing operation increase along with an increase in the reaction force from each coil spring.

In this embodiment, the height difference AA between the second coil spring 510a and the second coil spring 510b is set to be smaller than the height difference BB between the second coil spring B 510b and the third coil spring 511. In other words, AA < BB. Thereby, as will be described in detail later, it is possible to change the operation sense without increasing the click step when the button portion 500 is pressed down.

A relationship between the pressing load F and the pressed amount L illustrated in FIG. 9B will be discussed. In the initial state illustrated in FIG. 9A, the switch shaft 505 contacts the shaft pressing portion 505b provided on the ceiling of the spring holder 508. When the button portion 500 moves downward from this initial state under the pressing load, first the play between the parts is absorbed. Then, when the pressing load F becomes Fa0 and the pressed amount L becomes La0, the switch shaft 505 starts charging the first coil spring 509.

As the pressing load F increases, the switch shaft 505 moves downward while charging the first coil spring 509. Then, when the pressing load F becomes Fa1' and the pressed amount L becomes La1', the switch shaft 505 comes into contact with the second coil spring (coil spring A) 510a. From here, the pressing load F becomes Fa1 and the pressed amount L becomes La1, so the switch shaft 505, which has moved downward by the difference AA, comes into contact with the second coil spring (coil spring B) 510b. At this time, since the second coil springs 510a and 510b are in contact with the contacts 507b and 507c, respectively, the potential of the contact 507c falls to ground via the switch shaft 505, and as a result, the turning-on signal of the AF first switch 118 is output.

This embodiment provides the difference AA between the pressed amounts (i.e., the timings) at which the switch shaft 505 contacts the second coil spring 510a and the second coil spring 510b. As a result, the increase rate in the operating force for operation in the first operating range (AA) from the specific operating amount (La1') in the half-pressing operation to the completion of the half-pressing operation can be increased relative to the increase rate in the operating force for operation up to the specific operating amount. This configuration can provide the user with an operation sense in which the force for the pressing operation changes twice in the short stroke from the start of the pressing operation to the completion of the half-pressing operation (pressed amount La1), and the user can easily stop the pressing operation at the position where the half-pressing operation is completed. In other words, this configuration can suppress the user's unintentional pressing operation (fully pressing operation) beyond the position where the half-pressing operation is completed.

As the pressing load F further increases, the switch shaft 505 moves downward while charging the first coil spring 509 and the second coil springs 510a and 510b. Then, the pressing load F becomes Fa2 and the pressed amount L becomes La2, so that the switch shaft 505, which has moved downward by the difference BB, comes into contact with the third coil spring 511. Thereby, the potential of the contact 507d with which the third coil spring 511 is in contact falls to ground via the switch shaft 505, and the turning-on signal of the AF second switch 119 is output.

A pressed amount from the pressed amount La1' to the pressed amount La1 corresponds to the difference AA in height between the second coil spring 510a and the second coil spring 510b. A pressed amount from the pressed amount La1 to the pressed amount La2 corresponds to the difference BB in height between the second coil spring 510b and the third coil spring 511. As described above, the difference AA is smaller than the difference BB. That is, the first operating range (AA) in the half-pressing operation is narrower than the full operating range (second operating range: BB) in the fully pressing operation. Thereby, the operation sense can be changed without increasing the click step when the button portion 500 is pressed down.

Thereafter, as the pressing load F increases, the switch shaft 505 reaches its mechanical end and stops at the pressed amount La3.

VARIATION

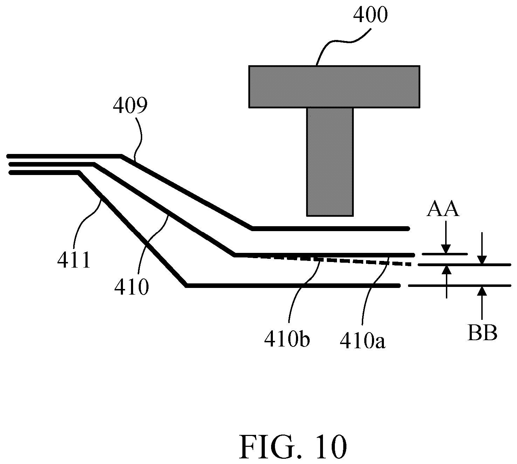

FIG. 10 illustrates a schematic diagram of a variation of the release button 122 illustrated in FIG. 7A of the first embodiment. Those elements in this variation, which are corresponding elements in the first embodiment, will be designated by the same reference numerals, and a description thereof will be omitted.

The spring holder 408 is disposed under the button 400. A first leaf spring 409, a second leaf spring 410, and a third leaf spring 411 are fixed to the spring holder 408 by leaf-spring fixing screws 415. The first leaf spring 409, the second leaf spring 410, and the third leaf spring 411 are separated from each other in the initial state. In the initial state, they are separated from each other.

In this variation, the tip side portion of the second leaf spring 410 is separated into leaf spring A 410a as the first elastic member and leaf spring B 410b as the second elastic member. When the button 400 is pressed down to deform the first leaf spring 409 downward, the first leaf spring 409 first comes into contact with leaf spring A 410a and then comes into contact with leaf spring B 410b. When the button 400 is pressed down further, the integrated first leaf spring 409 and second leaf spring 410 come into contact with the third leaf spring 411. In this way, by pressing the button 400, the first leaf spring 409 contacts the leaf spring A 410a of the second leaf spring 410, the leaf spring B 410b of the second leaf spring 410, and the third leaf spring 411 in this order to charge them. Thereby, the operating forces for the half-pressing operation and the fully pressing operation increase as the reaction force from each leaf spring increases.

In the second leaf spring 410, the height difference AA between the leaf spring A 410a and the leaf spring B 410b is smaller than the height difference BB between the leaf spring B 410b and the third leaf spring 411. In other words, AA < BB. Thereby, the operation sense can be changed similarly to FIG. 9B, without increasing the click step when the release button 122 is pressed down.

The structure of the AF start button 123 described in each embodiment is merely an example, and any structure is acceptable as long as it is possible to switch between a plurality of switch states by pressing the button down. The number of steps is not limited to two, but may be three or more. In the above embodiments, the operating force is set using the reaction force of a spring, but the operating force may be set using a force other than the spring reaction force, such as a magnetic force. The switch may be a pressure-sensitive switch whose state changes between a plurality of steps according to the operating force (pressure), rather than a push-down switch as in the embodiments.

In the above embodiments, the release button 122 as the first operation unit has a two-step switch structure, but the first operation unit may have a one-step switch structure instead of a two-step switch structure.

In the above embodiments, the release button and AF start switch are provided on the body of the lens interchangeable type camera, but these switches may be provided on a lens integrated type camera. The first operation unit and the second operation unit may be provided on an electronic apparatus other than a camera (especially one having an image sensor).

In the above embodiment, two operation unit are operable with the index finger and thumb, but the operating forces of two operation units operable with two fingers (first finger and second finger) other than the combination of the index finger and thumb may also be set as in the embodiment.

Various embodiments have been described in detail above but it will be understood that the present disclosure is not limited to these embodiments and encompasses all modifications, variants, alternatives and equivalents falling within the scope of the appended claims.

Each embodiment can provide an electronic apparatus in which the maximum operating force for operating a first operation unit and the maximum operating force for operating a second operation unit are different from each other.

**Claims**

1. An electronic apparatus comprising:

   a first operation unit (122) and a second operation unit (123) each operable by a user,
   **characterized in that** the first operation unit is configured to change a state of at least one switch (116, 117) when operated,
   wherein the second operation unit is configured to change a state of a first switch (118) according to a first operation, and a state of a second switch (119) according to a second operation following the first operation, with an operating force greater than that of the first operation, and
   wherein a maximum value (Fa2) of the operating force for the second operation with the second operation unit is different from a maximum operating force (Fr2) for operating the first operation unit.

2. The electronic apparatus according to claim 1, **characterized in that** the maximum value of the operating force for the second operation is greater than a maximum operating force for operating the first operation unit.

3. The electronic apparatus according to claim 1 or 2, **characterized in that** the first operation unit is operable with a first finger and a second finger of the user, which are different from each other.

4. The electronic apparatus according to any one of claims 1 to 3, **characterized in that** the second operation unit is configured to change the state of the second switch in a case where the operating force for the second operation becomes the maximum value.

5. The electronic apparatus according to any one of claims 1 to 4, **characterized in that** the second operation unit is configured to change the operating force for the second operation to become the maximum value before the state of the second switch changes.

6. The electronic apparatus according to any one of claims 1 to 5, **characterized in that** the first operation unit is configured to change a state of a third switch according to a third operation, and change a state of a fourth switch according to a fourth operation following the third operation, with an operating force greater than that of the third operation,

wherein the maximum value of the operating force for the second operation is greater than the operating force for the fourth operation.

7. The electronic apparatus according to claim 6, **characterized in that** a ratio of a maximum operating force to a minimum operating force for the second operation is greater than a ratio of a maximum operating force to a minimum operating force for the fourth operation.

8. The electronic apparatus according to claim 7, **characterized in that** the ratio for the second operation is 2.0 or more.

9. The electronic apparatus according to any one of claims 1 to 8, **characterized in that** the maximum value of the operating force for the second operation is 2.0 N or more.

10. The electronic apparatus according to any one of claims 1 to 9, **characterized in that** the second operation unit is configured to increase an increase rate in an operating force for operation in a first operating range from a specific operating amount in the first operation relative to an increase rate in an operating force for operation up to the specific operating amount.

11. The electronic apparatus according to claim 10, **characterized in that** the first operating range is narrower than a second operating range in which the second operation is performed.

12. The electronic apparatus according to any one of claims 1 to 11, **characterized in that** the electronic apparatus is an image pickup apparatus, and performs an operation regarding imaging according to each of an operation of the first operation unit and the first operation and the second operation of the second operation unit.

13. The electronic apparatus according to claim 12, **characterized in that** at least an imaging operation is performed according to the operation of the first operation unit.

14. The electronic apparatus according to claim 12, **characterized in that** an autofocus operation is started according to the first operation of the second operation unit.

15. The electronic apparatus according to claim 12, **characterized in that** an operation regarding autofocus or a change in a continuous shooting speed is performed according to the second operation.

16. The electronic apparatus according to claim 6, **characterized in that** the electronic apparatus is an image pickup apparatus, and performs an imaging preparation operation according to the third operation of the first operation unit, and an imaging operation according to the fourth operation.

17. The electronic apparatus according to any one of claims 1 to 16, **characterized in that** the first operation unit is provided on a top surface of a body, and the second operation unit is provided on a rear surface of the body.

18. An electronic apparatus comprising:

a first operation unit (122) and a second operation unit (123) each operable by a user,
**characterized in that** at least one of the first operation unit and the second operation unit is configured to:

change a state of a first switch according to a first operation,
change a state of a second switch according to a second operation following the first operation, with an operating force greater than that of the first operation, and
increase an increase rate of an operating force for operation in a first operating range from a specific operating amount in the first operation relative to an increase rate of the operating force for operation up to the specific operating amount.

19. The electronic apparatus according to claim 18, **characterized in that** the first operating range is narrower than a second operating range in which the second operation is performed.

20. The electronic apparatus according to claim 18, **characterized in that** the at least one includes a first elastic member and a second elastic member configured to generate a reaction force against the first operation,

wherein the first elastic member generates the reaction force up to a specific operation amount in the first operation, and
wherein the first elastic member and the second elastic member generate the reaction force in the first operating range.

21. The electronic apparatus according to any one of claims 18 to 20, **characterized in that** the electronic apparatus is an image pickup apparatus, and performs an operation regarding imaging according to each of an operation of the first operation unit and an operation of the second operation unit.

FIG. 1

EP 4 672 769 A1

FIG. 2A

FIG. 2B

FIG. 3A

FIG. 3B

FIG. 4A

FIG. 4B

FIG. 5A

FIG. 5B

FIG. 6A

FIG. 6B

FIG. 6C

FIG. 7A

FIG. 7B

FIG. 8A

PRESSING
LOAD F

(Fap2=) Fa5

Fa2

Fa4
(Fap1=) Fa1

Fa0

La0    La4    La1    La5    La2    La3    PRESSED
                                          AMOUNT L

## FIG. 8B

PRESSING
LOAD F

(Fap2=) Fa5

Fa2,Fr2

La0    La1    La2    PRESSED
Lr0    Lr1    Lr2    AMOUNT L

## FIG. 8C

FIG. 9A

FIG. 9B

FIG. 10

|  | HALF-PRESSING OPERATION | FULLY PRESSING OPERATION |
|---|---|---|
| S001 | LIGHT METERING & AF START | NA |
| S002 | NA | LIGHT METERING & AF START |
| S003 | LIGHT METERING & AF START | USER-DEFINED SETTING |
| S004 | USER-DEFINED SETTING | LIGHT METERING & AF START |
| S005 | USER-DEFINED SETTING | USER-DEFINED SETTING |

# FIG. 11A

| | | EXAMPLE OF FUNCTIONS |
|---|---|---|
| EXAMPLE OF FUNCTION ASSIGNMENT OF USER-DEFINED SETTINGS | K001 | AF STOP |
| | K002 | AE LOCK & AF STOP |
| | K003 | RETURN AF FRAME TO CENTER |
| | K004 | CHANGE AF AREA |
| | K005 | SWITCH TO REGISTERED AF FRAME |
| | K006 | EXECUTION OF OBJECT DETECTION |
| | K007 | START AND STOP TRACKING OBJECT |
| | K008 | SWITCH BETWEEN ONE-SHOT AF & SERVO AF |
| | K009 | SELECT AF AREA USING LINE OF SIGHT |
| | K010 | SWITCH TO REGISTERED AF FUNCTION |
| | K011 | FOCUS PRESET |
| | K012 | AE LOCK |
| | K013 | EXPOSURE COMPENSATION |
| | K014 | CHANGE CONTINUOUS SHOOTING SPEED |
| | K015 | PARTIALLY ENLARGE SCREEN |
| | K016 | CALL REGISTERED IMAGING FUNCTION |

# FIG. 11B

Europäisches
Patentamt

European
Patent Office

Office européen
des brevets

# EUROPEAN SEARCH REPORT

**Application Number**

EP 25 18 4790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 157353 A (MINOLTA CO LTD) 3 June 2004 (2004-06-03) | 1-13, 15-21 | INV. H04N23/50 G03B17/00 |
| Y | * the whole document * ----- | 14 | |
| Y | JP 2021 018382 A (CANON KK) 15 February 2021 (2021-02-15) * paragraph [0017] * ----- | 14 | |

**TECHNICAL FIELDS SEARCHED (IPC)**

H04N
G03D
G03B

The present search report has been drawn up for all claims

| Place of search | Date of completion of the search | Examiner |
|---|---|---|
| The Hague | 12 September 2025 | Didierlaurent, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 4790

12-09-2025

| Patent document cited in search report | Publication date | Patent family member(s) | Publication date |
|---|---|---|---|
| JP 2004157353 A | 03-06-2004 | NONE | |
| JP 2021018382 A | 15-02-2021 | JP 7271357 B2<br>JP 2021018382 A | 11-05-2023<br>15-02-2021 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021018382 A